# EUROPÄISCHE PATENTSCHRIFT

(11) **EP 1 015 955 B1**
(45) Veröffentlichungstag und Bekanntmachung des Hinweises auf die Patenterteilung: **23.01.2002**
(21) Anmeldenummer: 98951461.7
(22) Anmeldetag: 23.09.1998
(51) Int. Cl.: G06F 1/00

(54) **BAUGRUPPE MIT EINEM ODER MEHREREN STROMKREISEN EINES BESCHÄDIGUNGSDETEKTORS UND VERFAHREN ZUR HERSTELLUNG, PRÜFUNG UND/ODER MESSUNG EINER SOLCHEN BAUGRUPPE**
SUBASSEMBLY WITH ONE OR SEVERAL DAMAGE DETECTOR ELECTRIC CIRCUITS AND METHOD FOR PRODUCING, TESTING AND/OR MEASURING A SUBASSEMBLY OF THIS TYPE
BLOC DE COMPOSANTS A UN OU PLUSIEURS CIRCUITS ELECTRIQUES D'UN DETECTEUR DE DETERIORATION ET PROCEDE PERMETTANT DE PRODUIRE, VERIFIER ET/OU MESURER UN BLOC DE COMPOSANTS DE CE TYPE

(30) Priorität: 23.09.1997 DE 19741889
(43) Veröffentlichungstag der Anmeldung: 05.07.2000
(73) Patentinhaber: Höft & Wessel Aktiengesellschaft, 30659 Hannover (DE)
(72) Erfinder: BÖRKE, Joachim, D-31655 Stadthagen (DE)
(74) Vertreter: Einsel, Robert, Dipl.-Ing.
(86) Internationale Anmeldenummer: EP9806077
(87) Internationale Veröffentlichungsnummer: WO9915946

(56) Entgegenhaltungen:
- EP-A- 0 268 142
- WO-A-93/23648

## Beschreibung

Die Endung betrifft eine Baugruppe mit einem Datenspeicher und ein oder mehreren Stromkreisen eines Beschädigungsdetektors zur Vermeidung oder Erschwerung einer Ausspähung von in der Baugruppe enthaltenen Merkmalen, Daten oder dergleichen.

Elektronik-Baugruppen mit einem Beschädigungsdetektor zum Schutz eines in der Elektronik-Baugruppe enthaltenen Datenspeichers gegen Datenausspähung sind bekannt (DE 689 21 057 T2). Sie weisen ein Gehäuse für die Aufnahme der Elektronik-Baugruppe auf, die von einem mit Leiterbahnen versehenen Film umgeben ist. Bei einem Versuch, die Daten auszuspähen, muß notwendigerweise das Gehäuse geöffnet werden. Außerdem muß der Film geöffnet werden. Dabei werden diese Leiterbahnen unvermeidlich beschädigt Dadurch wiederum wird der Versuch einer Datenausspähung nachweisbar.

Es ist auch bekannt (EP 026 81 42 A2), einen Datenspeicher mit ein oder mehreren Spulen so zu umwickeln, daß kein direkter Zugriff auf den Datenspeicher möglich ist Die Verteilung des durch die Spulen erzeugten Magnetfeldes wird dort mit Sensoren überprüft.

Es ist ferner bekannt (WO 93/23 648 A1), Räume, Koffer oder dergleichen mit Alarm-Matten in Form von Geweben, Gestricken oder dergleichen in einer mehrere Schichten aufweisenden Struktur zu versehen. Bei einer Beschädigung der Struktur löst die Matte Alarm aus. Ein Datenspeicher oder ein Verguß der Alarmmatte und des Rauminhaltes ist nicht vorgesehen.

Schließlich ist es bekannt (DE 392 78 87 A1), eine integrierte Schaltung mit einer Metallschicht zu bedecken, die als Leiterbahn für die Energieversorgung der Schaltung genutzt wird. Bei Abtragung dieser Metallschicht bricht auch die Stromversorgung der integrierten Schaltung zusammen.

Der Erfindung liegt die Aufgabe zugrunde, eine Baugruppe mit einem neuartigen Beschädigungsdetektor zu schaffen. Diese Aufgabe wird durch die im Anspruch 1 definierte Erfindung gelöst. Weiterbildungen sind in den abhängigen Ansprüchen gekennzeichnet Verfahren zur Herstellung der Baugruppe und des Beschädigungsdetektors für die Baugruppe, insbesondere darin enthaltene Daten und Verfahren zur Anzeige von Ausspähversuchen durch Messung der Gewebewerte werden in den Ansprüchen 20 bis 25 definiert.

Durch die Erfindung wird eine gegen Ausspähung gesicherte Baugruppe mit niedrigem Gewicht und geringem Volumen durch Vermeidung wesentlicher Leerräume geschaffen. Die Sicherung gegen Ausspähung wird durch die textile Hülle oder Abdeckung preiswert realisiert. Im folgenden wird für die textile Hülle der Begriff Gewebe verwendet, unabhängig davon, ob die textile Hülle gewebt, gestrickt oder bestickt ist.

Im Prinzip besteht die Erfindung bei einer Baugruppe nach dem Oberbegriff des Anspruchs 1 darin, daß die Stromkreise isolierte, leitfähige Drähte enthalten, die in, zu oder auf einem Gewebe verarbeitet sind. Vorzugsweise enthält das Gewebe leitfähige Drähte mit Back-Lackierung und thermoplastische Kunststoff-Fäden.

Bei einer Ausführung ist das Gewebe schlauchförmig ausgebildet und umschließt die gefährdeten Teile eng und zur Gänze.. Das wird erreicht, indem das schlauchförmige Gewebe mit enger Maschenweite gefertigt wird. Es kann aber auch schrumpfbar ausgebildet sein, beispielsweise durch Verwendung gummiartiger Kunststoff-Fäden oder durch Wärmeeinwirkung. Vorzugsweise sind oder werden die leitfähigen Drähte miteinander verklebt.

Bei einer anderen Ausführung ist die Baugruppe in ein von außen zur Bedienung zugängliches Gehäuse eingesetzt. Hier werden die gefährdeten Teile der Baugruppe durch ein Gewebe flächig abgedeckt. Auch hier hat sich die Verwendung eines schlauchförmigen aber flach gelegten Gewebes bewährt. Als leitfähige Drähte sind Kupferdrähte besonders geeignet, weil sie mit geringem Durchmesser und enger Maschenweite webbar sind. Das Gewebe ist nach dem Einbringen oder Abdecken der Baugruppe oder ihrer gefährdeten Teile verklebt und /oder vergossen. Die leitfähigen Drähte des Gewebes bilden ein, zwei oder mehrere Stromkreise. Diese Stromkreise oder leitfähigen Drähte des Gewebes sind so angeordnet oder bemessen, daß sie hinsichtlich Unterbrechung, Kurzschluß, Widerstandsänderung, Magnetfeld-änderung und/oder Induktivitätsänderung prüf- oder meßbar sind.

Die leitfähigen Drähte jedes Stromkreises können in Serie geschaltet sein, also hintereinandergeschaltete Teilstücke aufweisen. Sie können aber auch parallelgeschaltete Teilstücke aufweisen.

Durch die Erfindung wird erreicht, daß beispielsweise bei Geräten mit gespeicherten Identifikations-Codes, wie sie für Scheckkarten oder dergleichen üblich sind, Ausspähversuche detektiert werden. Dabei können nicht nur solche Versuche angezeigt werden. Es ist auch möglich, zugleich oder stattdessen die Codes zu löschen und/oder Alarm zu geben.

Bei einem Verfahren zur Herstellung einer solchen Baugruppe werden:
- aus Kupferdrähten ggf. zusammen mit Kunststoff-Fäden durch textiles Herstellungsverfahren ein flaches oder schlauchförmiges Gewebe gebildet,
- die gefährdeten Teile der Baugruppe in das Gewebe eingebracht oder durch dieses abgedeckt,
- das Gewebe engmaschig gewebt und/oder geschrumpft,
- die Drähte miteinander verklebt und/oder das Gewebe vergossen,
- im Gewebe aus leitfähigen Drähten Stromkreise gebildet.

Das Verfahren zur Herstellung des Gewebes ist ein textiles Verfahren, vorzugsweise ein Strickverfahren. Weben und Sticken der leitfähigen Drähte (auf Trägermaterial) ist auch anwendbar.

Das Verfahren zur Prüfung und/ oder Messung des die Baugruppe umhüllenden oder abdeckenden Gewebes auf einen möglicherweise stattgefundenen Ausspähungsversuch hin beinhaltet beispielsweise, daß das Gewebe berührungsfrei auf Induktivitäts- oder Magnetfeldänderung gemessen wird. Die leitfähigen Drähte im Gewebe können aber auch Kontaktstellen für den galvanischen Anschluß einer Prüf- und/oder Meßeinrichtung aufweisen .

Statt oder zusätzlich zu einer solchen Messung zur Feststellung eines Ausspähversuches können die Stromkreise aber auch bei Veränderung ihres Zustandes den Dateninhalt der umhüllten oder abgedeckten Baugruppe selbsttätig löschen. Der allgemeine Begriff "Schutz gegen Ausspähung" soll auch den Schutz durch Erschwerung der Ausspähung umfassen.

Zur näheren Erläuterung der Erfindung werden im folgenden mehrere Ausführungsbeispiele anhand der Zeichnungen beispielhaft beschrieben. Diese zeigen in:
- **Figur 1**: eine Baugruppe gemäß der Erfindung, bei der ein Datenspeicher von einem schlauchförmigen Gewebe umhüllt ist,
- **Figur 2**: eine Baugruppe gemäß der Erfindung, bei der ein Datenspeicher durch ein flaches Gewebe abgedeckt ist,
- **Figur 3**: ein Gewebe mit zwei Stromkreisen, und
- **Figur 4**: ein Gerät mit einer Baugruppe gemäß der Erfindung.

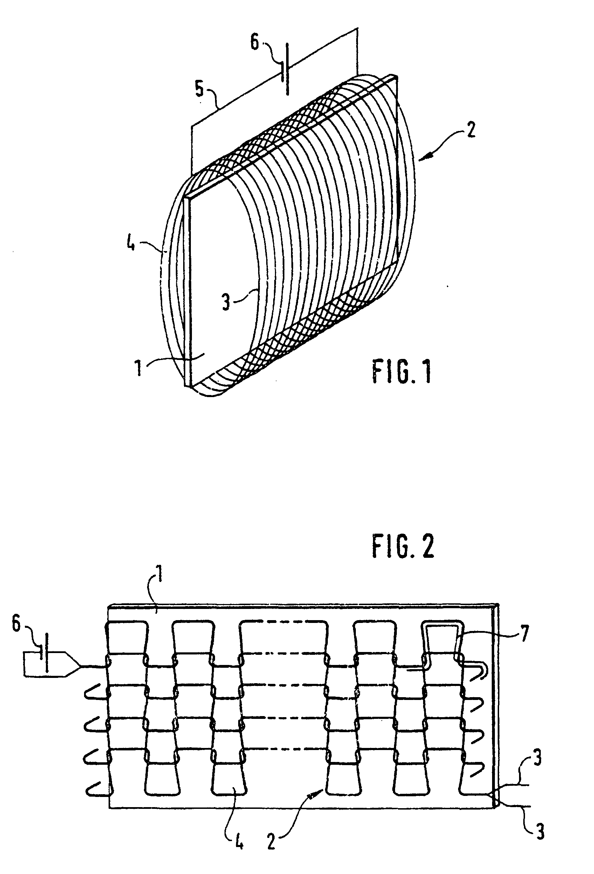

In Fig. 1 ist eine Baugruppe gemäß der Erfindung dargestellt, bei der ein Datenspeicher **1** von einem schlauchförmigen Gewebe **2** aus Drähten **3** umhüllt ist. Aus Gründen klarer Darstellung ist das Gewebe 2 nur vereinfacht gezeigt. Das Gewebe 2 ist dabei aus einzelnen Windungen des Drahtes 3 gebildet, die jeweils als geschlossene Windungen abgebildet sind. Der oder die Drähte 3 bestehen aus isoliertem Kupfer und sind dünn, beispielsweise 0,05 mm. Sie lassen sich daher leicht verstricken und verweben oder zum Besticken verwenden. Die Windungen des oder der Drähte 3 haben voneinander einen solchen kleinen Abstand, daß ihre Zwischenräume **4**, Maschen oder dergleichen nicht ohne Beschädigung der Drähte 3 oder ihrer Isolierung durchdringbar sind. Das Gewebe oder die aus dem Gewebe gebildete Hülle ist stabilisiert, indem die Windungen verklebt, verbacken und/ oder vergossen werden. Die innerhalb des Gewebes befindliche Baugruppe 1 kann daher nicht kontaktiert oder entnommen werden, ohne daß das Gewebe beschädigt oder zerstört wird. Bei einer Beschädigung des Gewebes 2 können durch Beschädigung der Isolierung der Drähte 3 Windungen kurzgeschlossen werden, weil die nun nicht mehr isolierten, einander benachbarten Drähte 3 miteinander Kontakt erhalten. Es ist auch möglich, daß Drahtverbindungen unterbrochen werden. Die Windungen 3 des Gewebes 2 sind Teil eines Stromkreises **5**, der im Falle einer Beschädigung seine elektrischen Eigenschaften ändert, also beispielsweise seinen elektrischen Widerstand verkleinert (Kurzschluß) oder vergrößert (Unterbrechung). Durch eine kleine Batterie **6** wird ständig oder zu Prüfzwecken in den Windungen ein Strom erzeugt. Dieser Strom ist bei nicht beschädigtem Gewebe mit einem vorgegebenen Wert bemessen. Bei jeder Beschädigung wird ein abweichender Wert nachweisbar. Im Fall ständigen Stromflusses kann die Abweichung automatisch festgestellt und bei kritischer Prüfung für eine Zerstörung der kritischen Teile der Baugruppe oder für eine Löschung der kritischen Daten genutzt werden. Die Batterie 6 ist vorzugsweise innerhalb des Gewebes 2 angeordnet. Die Messung auf geänderte Werte des fließenden Stromes kann durch Messung der Widerstandswerte oder von Strom und Spannung und/oder durch Messung der Induktivität oder des Magnetfeldes erfolgen. Eine Messung auf genaue Werte ist nicht erforderlich, da eine Feststellung der Abweichung genügt. Bei Verwendung eines ständigen Ruhestromes kann die angestrebte automatische Löschung der Daten über ein Relais oder dergleichen bewirkt werden.

In Fig. 2 ist eine Baugruppe gemäß der Erfindung dargestellt, bei der die Baugruppe 1 oder ein in ihr enthaltener Datenspeicher durch ein flach ausgebildetes Gewebe 2 abgedeckt ist, Das flache Gewebe 2 wird hier als ebener Ausschnitt eines flachen Gewebes 2 dargestellt. Das flache Gewebe 2 kann aber auch durch ein schlauchförmig gewebtes Gewebe 2 gebildet werden, das durch Zusammenfalten flach ausgebildet ist. In Fig. 2 ist ein Doppeldraht verwebt, was in Fig. 2 links oben durch die Einschaltung der Batterie 6 deutlich erkennbar ist. Die Anordnung nach Fig. 2 ist für Geräte vorteilhaft, bei denen die Baugruppe 1 selbst an ihrer Rückseite so vergossen oder befestigt ist, daß sie praktisch nicht zugänglich ist.

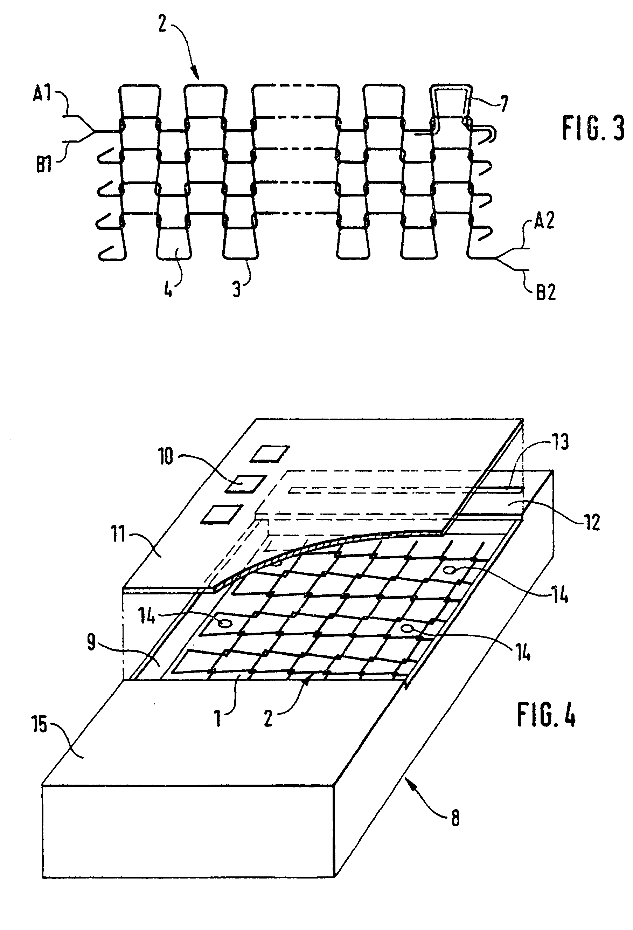

In Fig. 3 ist ein Ausschnitt einer Weiterbildung des Gewebes 2 aus Fig. 2 dargestellt, die zwei Stromkreise A1, B1 und A2, B2 enthält. Die Stromkreise enthalten jeweils zwei dünne Kupferdrähte mit einer sogenannten Back-Lackierung. Dünn ist beispielsweise ein Durchmesser von 0,05mm. Bei einem solchen Durchmesser ergibt ein kg Kupferdraht eine Drahtlänge von etwa 54 km. Um zu erreichen, daß das Gewebe 2 sich eng um die Elektronik-Baugruppe legt, ist dieses Gewebe 2 mit enger Maschenweite 4 gewickelt. Statt dessen oder zusätzlich kann das Gewebe auch mit Schrumpfeigenschaften gefertigt sein. Zur Stabilisierung des fertigen Gewebes 2 werden die Drähte miteinander verklebt oder das ganze Gewebe vergossen. Mit den Kupferdrähten 3 können auch Kunststoff-Fäden 7 aus thermoplastischem Material verwebt sein. Durch Erhitzung des Gewebes verkleben dann benachbarte leitfähige Drähte durch ihre Back-Lackierung und die Kunststoff-Fäden 7 verstärken die Verklebung und/oder bewirken die Schrumpfung. Durch das Vergießen wird die Baugruppe 1 eine feste Einheit.

Fig. 4 zeigt ein Gerät 8 mit einem Behältnis 9 für die Aufnahme einer Baugruppe 1 und einer Gewebeabdeckung 2 gemäß Fig. 2 sowie einem eine Tastatur 10 enthaltenen Deckel 11 und einem Scheckkartenleser 12, der hier nur durch die Öffnung 13 symbolisiert ist. Befestigungsstellen 14 für Schraubverbindungen von Baugruppe 1, Deckel 11 etc sind im Behältnis 9 angedeutet und werden so mit vergossen, daß auch ihre Entfernung zur Zerstörung führt. Kontakte, Batterien und ggf. Meßinstrumente können im Fach 15 untergebracht werden.

## Patentansprüche

1. Baugruppe mit einem Datenspeicher (1) und ein oder mehreren den Datenspeicher (1) bedeckenden Stromkreisen (5,A1, B1, A2, B2) eines Beschädigungsdetektors zur Vermeidung oder Erschwerung einer Ausspähung von in der Baugruppe enthaltenen Merkmalen, Daten oder dergleichen,
**dadurch gekennzeichnet,**
**dass** die Stromkreise (5, A1, B1, A2, B2) isolierte, leitfähige, Drähte (3) enthalten, die in, zu oder auf einem Gewebe (2) verarbeitet sind und dass das Gewebe (2) eine so geringe Maschenweite (4) hat, dass keine Kontaktierung des Datenspeichers (1) möglich und das Gewebe (2) bezüglich der Drähte (3) nicht beschädigungsfrei durchdringbar ist.

2. Baugruppe nach Anspruch 1,
**dadurch gekennzeichnet,**
**dass** die Drähte (3) Kupferdrähte mit einem Durchmesser von 0,05 mm sind.

3. Baugruppe nach Anspruch 1 oder 2,
**dadurch gekennzeichnet,**
**dass** das Gewebe (2) schlauchförmig ausgebildet ist.

4. Baugruppe nach Anspruch 1 oder 2,
**dadurch gekennzeichnet,**
**dass** das Gewebe (2) flächig ausgebildet ist.

5. Baugruppe nach einem der Ansprüche 1 - 4,
**dadurch gekennzeichnet,**
**dass** das Gewebe (2) leitfähige Drähte (3) mit Back-Lackierung enthält.

6. Baugruppe nach einem der Ansprüche 1 - 5,
**dadurch gekennzeichnet,**
**dass** das Gewebe (2) thermoplastische Kunststoff-Fäden (7) enthält.

7. Baugruppe nach einem der Ansprüche 1 - 6,
**dadurch gekennzeichnet,**
**dass** das schlauchförmige Gewebe (2) die Baugruppe ganz oder teilweise umschließt.

8. Baugruppe nach einem der Ansprüche 1 - 6,
**dadurch gekennzeichnet,**
**dass** das schlauchförmige Gewebe (2) die Baugruppe ganz oder teilweise abdeckt.

9. Baugruppe nach Anspruch 2,
**dadurch gekennzeichnet,**
**dass** die Maschenweite (4) durch enges Stricken, Weben oder dergleichen bewirkt wird.

10. Baugruppe nach Anspruch 2 oder 9,
**dadurch gekennzeichnet,**
**dass** die Maschenweite (4) durch Schrumpfung des Gewebes (2) verkleinert ist.

11. Baugruppe nach Anspruch 10,
**dadurch gekennzeichnet,**
**dass** die Schrumpfung durch Verwendung gummiartiger Kunststoff-Fäden (7) bewirkt wird.

12. Baugruppe nach Anspruch 10,
**dadurch gekennzeichnet,**
**dass** die Schrumpfung durch Wärmeeinwirkung bewirkt wird.

13. Baugruppe nach einem der Ansprüche 1 - 12,
**dadurch gekennzeichnet,**
**dass** die Maschen durch Verklebung des Gewebes (2) oder der leitfähigen Drähte (3) stabilisiert sind.

14. Baugruppe nach einem der Ansprüche 1 - 13,
**dadurch gekennzeichnet,**
**dass** die leitfähigen Drähte (3) strick- und oder webbare Kupferdrähte sind.

15. Baugruppe nach einem der Ansprüche 1 - 14,
**dadurch gekennzeichnet,**
**dass** das mit der Baugruppe zusammengefügte Gewebe (2) vergossen ist

16. Baugruppe nach einem der Ansprüche 1 - 15,
**dadurch gekennzeichnet,**
**dass** die leitfähigen Drähte (3) des Gewebes (2) wenigstens einen, vorzugsweise zwei Stromkreise (5, A1, Ba,, A2, B2) bilden oder enthalten.

17. Baugruppe nach einem der Ansprüche 1 - 16,
**dadurch gekennzeichnet,**
**dass** die Stromkreise (5, A1, B1, A2, B2) oder leitfähigen Drähte (3) des Gewebes (2) so angeordnet oder bemessen sind, daß sie hinsichtlich Unterbrechung, Kurzschluß und/oder Änderung der Induktivitäts-und/oder Widerstands- Werte prüf- oder meßbar sind.

18. Baugruppe nach einem der Ansprüche 1 - 17,
**dadurch gekennzeichnet,**
**dass** die leitfähigen Drähte (3) jedes Stromkreises (5, A1, B1, A2, B2) in Serie geschaltet sind, also hintereinandergeschaltete Teilstücke aufweisen.

19. Baugruppe nach einem der Ansprüche 1 - 18,
**dadurch gekennzeichnet,**
**dass** ein oder jeder Stromkreis (5, A1, B1, A2, B2) parallelgeschaltete Teilstücke aufweist.

20. Verfahren zur Herstellung einer Baugruppe mit einem Datenspeicher (1) und ein oder mehreren den Datenspeiches (1) bedeckenden Stromkreisen (5, A1, B1, A2, B2) eines Beschädigungsdetektors nach einem der Ansprüche 1 - 19
**dadurch gekennzeichnet,**
**dass**
- mit den leitfähigen Drähten (3) in einem textilen Herstellungsverfahren ein engmaschiges Gewebe (2) gefertigt wird,
- die zu sichernden Teile der Baugruppe in das Gewebe (2) eingebracht oder durch dieses abgedeckt werden,
- die leitfähigen Drähte (3) miteinander verklebt werden,
- das Gewebe (2) geschrumpft wird,
- das Gewebe (2) vergossen wird,
- im Gewebe (2) aus leitfähigen Drähten (3) Stromkreise (5, A1, B1, A2, B2) gebildet werden.

21. Verfahren nach Anspruch 20,
**dadurch gekennzeichnet,**
**dass** das textile Verfahren ein Strickverfahren ist.

22. Verfahren nach Anspruch 20,
**dadurch gekennzeichnet,**
**dass** die leitfähigen Drähte (3) und/ oder die Kunststoff-Fäden (7) gewebt werden.

23. Verfahren nach Anspruch 20,
**dadurch gekennzeichnet,**
**dass** die leitfähigen Drähte (3) und/ oder die Kunststoff-Fäden (7) auf ein Trägermaterial gestickt werden.

24. Verfahren zur Prüfung und/oder Messung des Gewebes einer Baugruppe nach einem der Ansprüche 1 bis 19,
**dadurch gekennzeichnet,**
**dass** das Gewebe (2) berührungsfrei auf Induktivitäts- und/oder Magnetfeldänderung gemessen wird.

25. Verfahren zur Prüfung und/oder Messung des Gewebes einer Baugruppe nach einem der Ansprüche 1 bis 19,
**dadurch gekennzeichnet,**
**dass** die leitfähigen Drähte (3) im Gewebe (2) kontaktiert und mit der Meßeinrichtung verbunden werden und daß Unterbrechungen, Kurzschlüsse, Widerstandsänderungen des oder der Stromkreise (5, A1, B1, A2, B2) optisch und/oder akustisch angezeigt werden.

## Claims

1. A module including a data store (1) and one or more damage detector electrical circuits (5, A1, B1, A2, B2) covering said data store (1) for preventing or making it more difficult to spy on features, data or the like contained in the module,
**characterised in that**
the electrical circuits (5, A1, B1, A2, B2) contain insulated conductive wires (3) which are worked in, into or onto a fabric (2), and **in that** the mesh size (4) in the fabric (2) is so small that it is not possible to make contact with the data store (1) and the fabric (2) cannot be penetrated without causing damage. in regard to the wires (3).

2. A module in accordance with Claim 1,
**characterised in that**
the wires (3) are copper wires having a diameter of 0.05 mm.

3. A module in accordance with Claim 1 or 2,
**characterised in that**
the fabric (2) is in the form of a flexible tube.

4. A module in accordance with Claim 1 or 2,
**characterised in that**
the fabric (2) has an extensive surface area.

5. A module in accordance with any of Claims 1 - 4,
**characterised in that**
the fabric (2) contains conductive wires (3) coated with baked enamel.

6. A module in accordance with any of Claims 1 - 5,
**characterised in that**
the fabric (2) contains threads (7) of a thermoplastic synthetic material.

7. A module in accordance with any of Claims 1 - 6,
**characterised in that**
the fabric (2) in the form of a flexible tube partially or completely surrounds the module.

8. A module in accordance with any of Claims 1 - 6,
**characterised in that**
the fabric (2) in the form of a flexible tube partially or completely covers the module.

9. A module in accordance with Claim 2,
**characterised in that**
the mesh size (4) is achieved by a tight knitting, weaving or like process.

10. A module in accordance with Claim 2 or 9,
**characterised in that**
the mesh size (4) is made smaller by shrinking the fabric (2).

11. A module in accordance with Claim 10,
**characterised in that**
the shrinkage is effected by using rubber-like threads (7) of a synthetic material.

12. A module in accordance with Claim 10,
**characterised in that**
the shrinkage is effected by a heating effect.

13. A module in accordance with any of Claims 1 - 12,
**characterised in that**
the apertures are stabilised by a process of applying adhesive to the fabric (2) or the conductive wires (3).

14. A module in accordance with any of Claims 1 - 13,
**characterised in that**
the conductive wires (3) are knittable and or weavable copper wires.

15. A module in accordance with any of Claims 1 - 14,
**characterised in that**
the module and the fabric (2) fitted thereto are encapsulated.

16. A module in accordance with any of Claims 1 - 15,
**characterised in that**
the conductive wires (3) of the fabric (2) form or contain at least one, and preferably two electrical circuits (5, A1, B1, A2, B2).

17. A module in accordance with any of Claims 1 - 16,
**characterised in that**
the electrical circuits (5, A1, B1, A2, B2) or the conductive wires (3) of the fabric (2) are arranged or dimensioned in such a manner that they are testable or measurable in regard to breaks, short-circuits and/or alterations in the values of their inductance and/or resistance.

18. A module in accordance with any of Claims 1 - 17,
**characterised in that**
the conductive wires (3) of each electrical circuit (5, A1, B1, A2, B2) are connected in series i.e. they comprise sub-sections connected one behind the other.

19. A module in accordance with any of Claims 1 - 18,
**characterised in that**
one or each electrical circuit (5, A1, B1, A2, B2) comprises sub-sections connected in parallel.

20. A method of manufacturing a module including a data store (1) and one or more damage detector electrical circuits (5, A1, B1, A2, B2) covering,said data store (1) in accordance with any of Claims 1 - 19,
**characterised in that**
- a tight-meshed fabric (2) is produced with the conductive wires (3) using a textile manufacturing process,
- the parts of the module requiring protection are inserted into the fabric (2) or are covered thereby,
- the conductive wires (3) are adhered together,
- the fabric (2) is shrunk,
- the fabric (2) is encapsulated,
- electrical circuits (5, A1, B1, A2, B2) are formed in the fabric (2) of conductive wires (3).

21. A method in accordance with Claim 20,
**characterised in that**
the textile process is a knitting process.

22. A method in accordance with Claim 20,
**characterised in that**
the conductive wires (3) and/or the threads (7) of synthetic material are woven.

23. A method in accordance with Claim 20,
**characterised in that**
the conductive wires (3) and/or the threads (7) of synthetic material are embroidered on a support material.

24. A method of testing and/or measuring the fabric of a module in accordance with any of Claims 1 to 19,
**characterised in that**
the fabric (2) is measured for alterations in inductance and/or magnetic fieid in non-contact making manner.

25. A method of testing and/or measuring the fabric of a module in accordance with any of Claims 1 to 19,
**characterised in that**
contact is made with the conductive wires (3) in the fabric (2) and these are connected to the measuring device, and **in that** breaks, short-circuits, alterations in the resistance of the electrical circuit or circuits (5, A1, B1, A2, B2) are indicated optically and/or acoustically.

## Revendications

1. Bloc fonctionnel comportant une mémoire de données (1) et un ou plusieurs circuits (5, A1, B1, A2, B2), recouvrant la mémoire de données (1), d'un détecteur de détérioration permettant d'éviter ou de faire obstacle à l'espionnage des caractéristiques, données, ou analogues contenues dans le bloc fonctionnel,
**caractérisé par le fait que**
les circuits (5, A1, B1, A2, B2) contiennent des fils conducteurs isolés (3), qui sont réalisés dans, en forme de ou sur un tissu (2), que le tissu (2) possède une largeur de mailles (4) assez petite pour qu'il soit impossible d'établir un contact avec la mémoire de données (1) et que le tissu (2) n'est pas pénétrable sans détérioration des fils (3).

2. Bloc fonctionnel selon la revendication 1,
**caractérisé par le fait que**
les fils (3) sont des fils de cuivre d'un diamètre de 0,05 mm.

3. Bloc fonctionnel selon la revendication 1 ou 2,
**caractérisé par le fait que**
le tissu (2) est réalisé sous forme tubulaire.

4. Bloc fonctionnel selon la revendication 1 ou 2,
**caractérisé par le fait que**
le tissu (2) est réalisé sous forme plane.

5. Bloc fonctionnel selon l'une des revendications 1 à 4,
**caractérisé par le fait que**
le tissu (2) contient des fils conducteurs (3) avec vernissage arrière.

6. Bloc fonctionnel selon l'une des revendications 1 à 5,
**caractérisé par le fait que**
le tissu (2) contient des fils (7) en matière thermoplastique.

7. Bloc fonctionnel selon l'une des revendications 1 à 6,
**caractérisé par le fait que**
le tissu tubulaire (2) entoure complètement ou partiellement le bloc fonctionnel.

8. Bloc fonctionnel selon l'une des revendications 1 à 6,
**caractérisé par le fait que**
le tissu tubulaire (2) recouvre complètement ou partiellement le bloc fonctionnel.

9. Bloc fonctionnel selon la revendication 2,
**caractérisé par le fait que**
la largeur de mailles (4) est obtenue serrée par tricotage, tissage ou similaire.

10. Bloc fonctionnel selon la revendication 2 ou 9,
**caractérisé par le fait que**
la largeur de mailles (4) est diminuée par rétrécissement du tissu (2).

11. Bloc fonctionnel selon la revendication 10,
**caractérisé par le fait que**
le rétrécissement est obtenu par utilisation de fils (7) en plastique caoutchouteux.

12. Bloc fonctionnel selon la revendication 11,
**caractérisé par le fait que**
le rétrécissement est obtenu par effet thermique.

13. Bloc fonctionnel selon l'une des revendications 1 à 12,
**caractérisé par le fait que**
les mailles sont stabilisées par collage du tissu (2) ou des fils conducteurs (3).

14. Bloc fonctionnel selon l'une des revendications 1 à 13,
**caractérisé par le fait que**
les fils conducteurs (3) sont des fils de cuivre tricotables ou tissables.

15. Bloc fonctionnel selon l'une des revendications 1 à 14,
**caractérisé par le fait que**
le tissu (2) assemblé avec le bloc fonctionnel est scellé.

16. Bloc fonctionnel selon l'une des revendications 1 à 15,
**caractérisé par le fait que**
les fils conducteurs (3) du tissu (2) forment ou contiennent au moins un, de préférence deux circuit(s) (5, A1, B1, A2, B2).

17. Bloc fonctionnel selon l'une des revendications 1 à 16,
**caractérisé par le fait que**
les circuits (5, A1, B1, A2, B2) ou les fils conducteurs (3) du tissu (2) sont disposés ou dimensionnés de manière à pouvoir être contrôlés ou mesurés eu égard à une coupure, un court-circuit et/ou une modification de leur inductance et/ou résistance.

18. Bloc fonctionnel selon l'une des revendications 1 à 17,
**caractérisé par le fait que**
les fils conducteurs (3) de chaque circuit (5, A1, B1, A2, B2) sont connectés en série et présentent donc des tronçons montés en série.

19. Bloc fonctionnel selon l'une des revendications 1 à 18,
**caractérisé par le fait que**
l'un ou tous les circuits (5, A1, B1, A2, B2) présente(nt) des tronçons connectés en parallèle.

20. Procédé de fabrication d'un bloc fonctionnel comportant une mémoire de données (1) et un ou plusieurs circuits (5, A1, B1, A2, B2), recouvrant la mémoire de données (1), d'un détecteur de détérioration selon l'une des revendications 1 à 19,
**caractérisé par le fait que**
- un tissu (2) à mailles serrées est réalisé avec les fils conducteurs (3) par un procédé de fabrication textile,
- les pièces du bloc fonctionnel à protéger sont insérées dans le tissu (2) ou recouvertes par celui-ci,
- les fils conducteurs (3) sont collés ensemble,
- le tissu (2) est rétréci,
- le tissu (2) est scellé,
- des circuits (5, A1, B1, A2, B2) en fils conducteurs (3) sont formés dans le tissu (2).

21. Procédé selon la revendication 20,
**caractérisé par le fait que**
le procédé textile est un procédé de tricotage.

22. Procédé selon la revendication 20,
**caractérisé par le fait que**
les fils conducteurs (3) et/ou les fils de plastique (7) sont tissés.

23. Procédé selon la revendication 20,
**caractérisé par le fait que**
les fils conducteurs (3) et/ou les fils de plastique (7) sont brodés sur un matériau support.

24. Procédé de contrôle et/ou mesure du tissu d'un bloc fonctionnel selon l'une des revendications 1 à 19,
**caractérisé par le fait que**
les modifications d'inductance et/ou de champ magnétique du tissu (2) se mesurent sans contact.

25. Procédé de contrôle et/ou mesure du tissu d'un bloc fonctionnel selon l'une des revendications 1 à 19,
**caractérisé par le fait que**
les fils conducteurs (3) du tissu (2) sont contactés et reliés au dispositif de mesure et que les coupures, court-circuits, modifications de résistance du ou des circuits (5, A1, B1, A2, B2) sont signalés visuellement et/ou acoustiquement.
